# EUROPÄISCHE PATENTSCHRIFT

(11) **EP 0 340 418 B1**
(45) Veröffentlichungstag und Bekanntmachung des Hinweises auf die Patenterteilung: **05.01.1994**
(21) Anmeldenummer: 89104096.6
(22) Anmeldetag: 08.03.1989
(51) Int. Cl.: G01D 11/24, G12B 17/02

(54) **Impulsgeber**
Pulse generator
Dispositif producteur d'impulsions

(30) Priorität: 06.05.1988 DE 3815452
(43) Veröffentlichungstag der Anmeldung: 08.11.1989
(73) Patentinhaber: MANNESMANN REXROTH PNEUMATIK GMBH, 30453 Hannover (DE)
(72) Erfinder: Bruer, Heinz-Dieter, D-3000 Hannover 91 (DE); Lehnert, Erhard, D-3162 Uetze/Dollbergen (DE); Keschwari, Mahmud, D-3013 Barsinghausen 1 (DE); Wischnat, Edgar, D-3160 Lehrte (DE)
(74) Vertreter: Flaig, Siegfried

(56) Entgegenhaltungen:
- EP-A- 0 233 346
- PATENT ABSTRACTS OF JAPAN, Band 7, Nr. 260 (P-237) 18. November 1983; & JP-A-58 142 268

## Beschreibung

Die Erfindung bezieht sich auf einen Impulsgeber, insbesondere für ein Gleitschutzsystem in einem Schienenfahrzeug, gemaß dem Oberbegriff des Patentanspruchs 1.

Derartige Impulsgeber in Schienenfahrzeugen haben besonders schwere Einsatzbedingungen in bezug auf Umgebungstemperaturen, Korrosion, mechanische Beschädigung, Erschütterung und elektrische Störfestigkeit auszuhalten. Der Impulsgeber ist am Achslagerdeckel des Fahrzeugs angeflanscht und steht einem gezahnten Polrad gegenüber. Der Abstand zwischen den Zahnköpfen des Polrades und dem Impulsgeber beträgt etwa 1 mm.

EP-A-0 233 346 offenbart eine Abschirmvorrichtung, bei der die die Elektronik tragende Schallplatte in einer ersten elektrisch isolierenden Umhüllung eingeschmolzen ist. Diese Umhüllung von weiteren Umhüllungen umgossen.

Der Impulsgeber besteht im wesentlichen aus einem Stahlrohr, das an seiner Kopfseite mit einer Isolierstoffscheibe abgedeckt ist. Im Innern des Rohres ist vorne ein magnetfeldempfindliches Feldplatten-Element in Verbindung mit einem Dauermagneten eingebaut. Der magnetische Fluß des Dauermagneten wird durch die Zähne des Polrades moduliert. Zur Verstärkung und zur Pulsformung des elektrischen Ausgangssignals des Feldplatten-Elements ist weiter eine Elektronik eingebaut, welche an die Feldplatte angeschlossen ist.

Das elektrische Ausgangssignal des Impulsgebers wird über eine Leitung ins Wageninnere geführt und dort für verschiedene Zwecke, wie z.B. für die Geschwindigkeitsanzeige, den Kilometerzähler, oder für eine Gleitschutz- bzw. Schleuderschutzelektronik ausgewertet.

Besonders schwierige Einsatzbedingungen für den Impulsgeber sind beim Einbau in ein elektrisch angetriebenes Zugfahrzeug gegeben, da hier starke elektrische Potentialverschiebungen am Einbauort auftreten können. Unter ungünstigen Bedingungen kann, besonders beim Anfahren des Zuges, durch den Fahrstrom das elektrische Potential am Einbauort des Gebers auf eine Spannung im kV-Bereich ansteigen. Hierdurch kann es zu elektrischen Störungen kommen, wenn diese Spannungen auf direktem oder auf kapazitivem Wege in die Auswerteelektronik des Gebers eindringen.

Der Erfindung liegt die Aufgabe zugrunde, den Impulsgeber so auszubilden, daß das Eindringen elektrischer Störungen in die Auswerteelektronik ausgeschlossen ist. Weiter soll die Beständigkeit des Impulsgebers gegen Erschütterungen und hohe Umgebungstemperaturen gewährleistet sein.

Diese Aufgabe wird durch die im Patentanspruch 1 enthaltene Erfindung gelöst. Die Unteransprüche enthalten zweckmäßige Weiterbildungen der Erfindung.

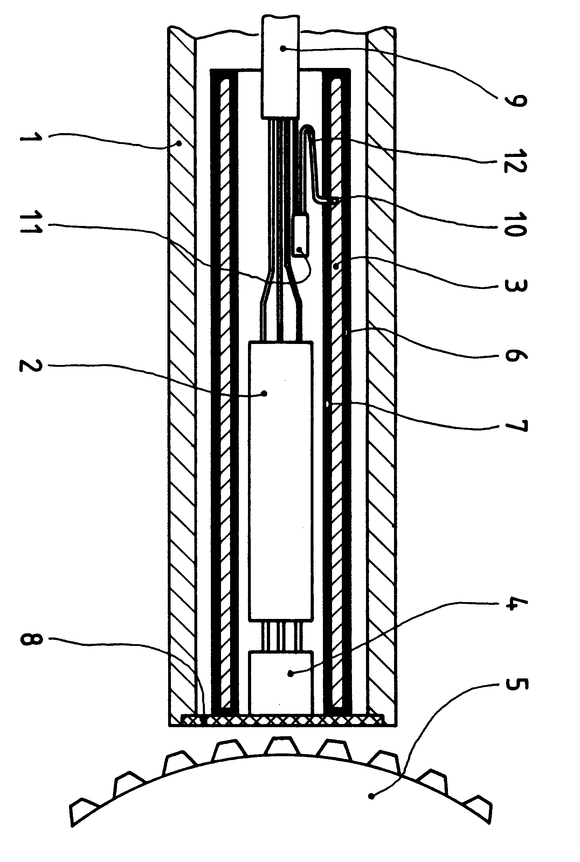

Die Erfindung wird im folgenden anhand einer Zeichnung näher erläutert. Die Zeichnung zeigt in schematischer Darstellung einen Längsschnitt durch den erfindungsgemäßen Impulsgeber.

Der Impulsgeber ist in einem rohrförmigen Gehäuse (1) eingebaut, das am Achslagerdeckel angeflanscht ist (nicht dargestellt). Das Gehäuse (1) ist an der Vorderseite mit einer Scheibe (8) abgeschlossen, welche aus einem faserverstärkten Epoxidharz besteht. Im Abstand von etwa 1 mm steht dem Impulsgeber ein gezahntes Polrad (5) gegenüber, welches mit der Wagenachse verbunden ist.

Im Innern des Gehäuses (1) ist ein magnetfeldempfindliches Teil (4), insbesondere eine sogenannte Feldplatte hinter der Scheibe (8) angeordnet. Das Teil (4) ist elektrisch verbunden mit einer Elektronik (2). In dieser werden die Signale des Teiles (4) verarbeitet. Die Elektronik (2) ist verbunden mit einem Anschlußkabel (9).

Zur Abschirmung der Elektronik (2) sowie des magnetfeldempfindlichen Teils (4) gegen elektrische Störungen, welche von dem Gehäuse (1) ausgehen, ist eine metallische Abschirmung (3) vorgesehen, die isoliert zwischen dem Gehäuse (1) und der Elektronik (2) angeordnet ist. Die Abschirmung ist als Metallrohr (3) ausgebildet, welches allseitig mit einer Isolierschicht (Epoxidharzbeschichtung (6, 7)) versehen ist. Die Isolationsfestigkeit dieser Beschichtung ist so ausgelegt, daß die oben erwähnte Spannungsbeanspruchung im kV-Bereich zwischen dem Gehäuse (1) und der Elektronik nicht zum elektrischen Durchschlag der Schicht führt.

Epoxidharz hat dabei den Vorteil, daß es leicht in jeder gewünschten Schichtdicke auf das Metall aufgebracht werden kann (Pulverbeschichtung). Es ist ferner beständig gegen eventuell auftretende hohe Temperaturen und von hoher mechanischer Festigkeit.

Vorteilhaft ist die Isolierschicht beidseitig auf das Metallrohr (3) aufgebracht, um leitende Berührungen mit Teilen der Elektronik (2) zu verhindern.

Das Metallrohr (3) ist durch beliebige Mittel, beispielsweise durch Vergießen, oder durch eine zwischengesteckte Klemmbuchse, mit dem Gehäuse (1) mechanisch verbunden. Die Elektronik (2) und das magnetfeldempfindliche Teil (4) kann ebenfalls durch Vergießen innerhalb des Rohres (3) festgelegt sein.

Das Metallrohr (3) ist elektrisch leitend mit einem Masseanschluß der Elektronik (2) verbunden. Hierzu ist mittels einer Klemme (11) ein Draht (12) mit einer Masseleitung verbunden. Der Draht (12) wird in eine Bohrung (10) des Metallrohres (3) eingesteckt und dort durch geeignete Mittel, z.B. durch Verlöten mit dem Metallrohr (3) verbunden. Durch den Lötvorgang wird die Epoxidharzschicht nicht beschädigt.

Als Material für das Metallrohr (3) ist vorzugsweise Stahl vorgesehen. Die aufgebrachte Epoxidharz-Isolierschicht ist etwa 0,3 bis 0,4 mm dick.

Durch die erfindungsgemäße, als Metallrohr ausgebildete Abschirmung wird trotz sehr beengter Einbauverhältnisse eine elektrisch und mechanisch zuverlässige Abschirmung gegen elektrische und magnetische Störstrahlungen erreicht.

## Patentansprüche

1. Impulsgeber, insbesondere für ein Gleitschutzsystem in einem Schienenfahrzeug, mit einem rohrförmigen, metallischen Gehäuse (1), einer im Gehäuse (1) integrierten Elektronik (2) und einem magnetfeldempfindlichen Teil (4), das einem rotierenden, gezahnten Polrad (5) gegenüber steht, dadurch gekennzeichnet, daß die Elektronik (2) von einem abschirmenden Metallrohr (3) umhüllt ist, das isoliert und mechanisch fixiert zwischen dem Gehäuse (1) und der Elektronik (2) angeordnet ist, elektrisch mit einem Masseanschluß der Elektronik (2) verbunden ist, und mit einer inneren und äußeren Isolierschicht (6, 7) versehen ist.

2. Impulsgeber nach Anspruch 1, dadurch gekennzeichnet, daß als Isolierschicht (6, 7) eine Epoxidharzbeschichtung vorgesehen ist.

3. Impulsgeber nach den Ansprüchen 1 und 2, dadurch gekennzeichnet, daß der Masseanschluß durch einen in eine Bohrung (10) des Metallrohres (3) eingelöteten Draht (12) hergestellt ist.

## Claims

1. Impulse Transmitter, especially for an anti-skid system for a railbound vehicle, with a tubular metallic casing (1) and an electronics unit (2) integrated into this casing (1) and featuring a magnetic field sensitive part (4) arranged opposite to a rotating toothed pole wheel (5),
characterised by:
the electronics unit (2) being encased in a shielding metal tube or sheath (3), the latter being insulated and mechanically fixed between the casing (1) and the electronics unit (2), electrically linked with an earthing connection for the electronics unit (2) and featuring an inner as well as an outer insulating layer (6,7).

2. Impulse Transmitter,
to Claim 1,
characterised by:
the insulating layers (6,7) consisting in this instance of an epoxy-resin coating.

3. Impulse Transmitter,
to Claims 1 and 2,
characterised by:
the earthing connection being established via a wire (12) soldered into a bore (10) of the metal tube or sheath (3).

## Revendications

1. Détecteur d'impulsions, en particulier pour un système anti-patinage dans un véhicule sur rail, avec un boîtier de forme tubulaire, métallique (1), un système électronique (2) intégré dans le boîtier (1) et une pièce (4) sensible aux champs magnétiques, qui est en regard d'une roue polaire tournante, dentée (5), détecteur d'impulsions caractérisé en ce que le système électronique (2) est entouré par un tube métallique protecteur de blindage (3), qui est disposé en étant fixé de façon isolante et mécanique entre le boîtier (1) et le système électronique (2), est relié électriquement avec un raccord à la masse au système électronique (2) et est pourvue d'une couche isolante intérieure et extérieure (6, 7).

2. Détecteur d'impulsions selon la revendication 1, caractérisé en ce que l'on prévoit comme couche isolante (6, 7) une enduction de résine époxy.

3. Détecteur d'impulsions selon les revendications 1 et 2, caractérisé en ce que le raccord à la masse est assuré par un câble (12) brasé dans un alésage (10) du tube métallique (3).
